# EUROPEAN PATENT APPLICATION

(11) **EP 4 834 843 A1**
(43) Date of publication of application: **04.11.2026**
(21) Application number: 24913224.2
(22) Date of filing: 04.11.2024
(51) Int. Cl.: C01D 17/00, C01G 21/16

(54) **METHOD FOR PREPARING HIGH-PURITY CESIUM-BASED PEROVSKITE POWDER**

(30) Priority: 28.12.2023 KR 20230195770
(71) Applicant: Hanwha Solutions Corporation, Jung-gu Seoul 04541 (KR)
(72) Inventor: SHIN, Gwang Su, Seoul 04541 (KR)
(74) Representative: Mooser, Sebastian Thomas
(86) International application number: PCT/KR2024/017172
(87) International publication number: WO 2025/143510

(57) **Abstract**

The present invention relates to a method for preparing cesium-based perovskite and, more specifically, to a method for synthesizing cesium-based perovskite with high yield and high purity, and to the cesium-based perovskite prepared by using the method.

## Description

### TECHNICAL FIELD

The present invention relates to a method for preparing a cesium-based perovskite powder with high purity and a high-purity cesium-based perovskite prepared by the method.

### BACKGROUND ART

In order to solve the global environmental problems caused by the depletion of fossil fuels and the usage thereof, research on renewable and clean alternative energy sources such as solar energy, wind power and hydropower is actively being conducted.

Among these, interest in solar cells that directly convert electrical energy from sunlight is increasing significantly. Here, a solar cell refers to a cell that generates current-voltage by utilizing the photovoltaic effect that generates electrons and holes by absorbing light energy from sunlight.

Currently, it is possible to manufacture n-p diode-type silicon (Si) single crystal-based solar cells with a light energy conversion efficiency of over 20%, and they are actually being used for solar power generation, and there are also solar cells using compound semiconductors such as gallium arsenide (GaAs) with an even higher conversion efficiency. However, these inorganic semiconductor-based solar cells require highly purified materials to achieve high efficiency, and thus, a lot of energy is consumed in refining the raw materials, and expensive process equipment is required in the process of using the raw materials to make a single crystal or thin film, which limits the cost of lowering the manufacturing cost of solar cells, and this has been an obstacle to large-scale utilization.

Accordingly, in order to manufacture solar cells at low cost, it is necessary to drastically reduce the cost of materials or manufacturing processes used as core elements of solar cells, and research is being conducted on perovskite solar cells that can be manufactured by using low-cost materials and processes as an alternative to inorganic semiconductor-based solar cells.

The general structural formula of a perovskite structure is the ABX₃ structure, where an anion is located at the X site, a large cation is located at the A site, and a small cation is located at the B site.

In order to tune the bandgap of a perovskite material based on FAPbI₃ to suit silicon tandem cells, the mixing of CsPbBr₃ is essential. The addition of wide bandgap CsPbBr₃ (~3.82 eV) to the narrower FAPbI₃ (~1.48 eV) enables tuning into a perovskite material (~1.66 eV) that is suitable for tandem cells. CsPbBr₃ has the advantages of higher solubility and being easy to produce, and thus, it is widely used. However, Oxford PV holds a prior patent for the production of perovskite under the above conditions. Therefore, a method for tuning perovskite in addition to the above method is required.

In general, there is a method of tuning the A site and the halide X site to control the band gap of perovskite. In the case of the A site, it is controlled through methylammonium (MA), formamidinium (FA), cesium (Cs) and the like, and research and attempts are being made to introduce cesium-based perovskites such as CsPbBr₃ to FAPbI₃ based on FA with high efficiency and high stability, and to commercialize modified products.

As an inorganic metal halide material, perovskite with the structure of CsPbX₃ (X = Cl, Br or I) has a wide spectrum of approximately 410 to 700 nm, and has the advantage of being able to absorb the entire visible range and exhibit various fluorescent colors by adjusting the constituent elements. Therefore, it is very promising as a variety of optoelectronic devices such as lasers, displays, solar cells and photosensors.

### DISCLOSURE

### TECHNICAL PROBLEM

The present invention aims to provide a method for preparing a cesium-based perovskite with high purity and high reproducibility by optimizing the chemical composition of a precursor used in preparing a cesium-based perovskite, and a cesium-based perovskite prepared thereby.

### TECHNICAL SOLUTION

In order to solve the above-described problems, the present invention provides a method for preparing a cesium-based perovskite that performs a process including step 1 of preparing a first precursor aqueous solution by dissolving a cesium halogen compound represented by Chemical Formula 1 in water and a second precursor solution by dissolving a lead halogen compound represented by Chemical Formula 2 in an organic solvent, respectively; step 2 of introducing the first precursor aqueous solution into the second precursor solution and reacting to obtain a precipitate that is a reaction product; and step 3 of purifying and drying the obtained precipitate to obtain a cesium-based perovskite represented by Chemical Formula 3 below.

[Chemical Formula 1] CsX₍₁₋ₐ₎X'ₐ

[Chemical Formula 2] PbX₍₃₋ₐ₎

[Chemical Formula 3] CsPbX₍₃₋ₐ₎X'ₐ

In Chemical Formula 1 to Chemical Formula 3, a is a rational number satisfying 0 < a ≤ 1, and X and X' are independently -Cl or -Br.

In a preferred embodiment of the present invention, the organic solvent of step 1 may include one or more selected from dimethylformamide (DMF), dimethylsulfoxide (DMSO), dimethylacetamide (DMAc), dimethyl imidazolidinone (DMI), gamma butyrolactone (GBL) and 2-methoxyethanol (2Me).

In a preferred embodiment of the present invention, the second precursor solution of step 1 may have a lead halide compound concentration of 0.005 M to 1.000 M.

In a preferred embodiment of the present invention, the first precursor aqueous solution of step 1 may have a cesium halogen compound concentration of 1.0 M or more.

In a preferred embodiment of the present invention, step 2 may mix and react a first precursor in the first precursor aqueous solution and a second precursor in the second precursor solution so as to have a molar ratio of 1:0.8 to 1.0.

In a preferred embodiment of the present invention, the reacting of step 2 may be carried out under ambient conditions at 15 to 35°C.

In a preferred embodiment of the present invention, the cesium-based perovskite obtained in step 3 may have a yield of 75.0% to 99.5% and a purity of 99.00% or more.

Another object of the present invention is to provide a high-purity cesium-based perovskite powder, which is prepared by the method described above, and may have a purity of 99.00% or more.

Still another object of the present invention relates to a perovskite complex, and it is a perovskite powder that uses a cesium-based perovskite prepared by the method described above, and the perovskite complex may be a perovskite represented by Chemical Formula 4 below.

[Chemical Formula 4] CsₐMX_{b}X'_{(3-b)}

In Chemical Formula 4, M is a divalent cation and includes one or two selected from Fe, Co, Ni, Cu, Sn, Pb, Bi, Ge, Ti, Eu and Zr, and X and X' are independently Cl, Br or I (where X and X' are different halogen elements), a is an integer of 0 < a ≤ 1, and b is an integer of 0 < a ≤ 3.

In addition, another object of the present invention is to provide a perovskite solar cell including the perovskite complex as a light-absorbing layer (or a photoactive layer).

### ADVANTAGEOUS EFFECTS

The method for preparing a cesium-based perovskite of the present invention can produce a high-purity cesium-based perovskite with high reproducibility and a high yield, thereby providing a cesium-based perovskite with excellent economic feasibility.

### DESCRIPTION OF DRAWINGS

FIGS. 1A and 1B are photographs of cesium-based perovskites prepared in Examples 1 to 5.
FIG. 2 is a photograph taken of a first precursor solution (A), a second precursor solution (B), and after mixing and reacting them (C) in Comparative Example 1.
FIG. 3 is a photograph taken of a first precursor solution (A), a second precursor solution (B), and after mixing and reacting them (C) in Comparative Example 2.
FIGS. 4A and 4B are X-ray diffraction (XRD) measurement data of cesium-based perovskites prepared in Examples 1 to 5.
FIGS. 5A and 5B are thermal gravimetric analysis (TGA) measurement data of cesium-based perovskites prepared in Examples 1 to 5.

### MODES OF THE INVENTION

Hereinafter, the present invention will be described in more detail.

The present invention relates to a method for preparing a high-purity cesium-based perovskite having a purity of 99.00% or more with a high yield, and may be produced by performing the following process.

For the cesium-based perovskite powder of the present invention, a process including step 1 of preparing a first precursor aqueous solution by dissolving a cesium halogen compound represented by Chemical Formula 1 in water and a second precursor solution by dissolving a lead halogen compound represented by Chemical Formula 2 in an organic solvent, respectively; step 2 of introducing the first precursor aqueous solution into the second precursor solution and reacting to obtain a precipitate that is a reaction product; and step 3 of purifying and drying the obtained precipitate to obtain a cesium-based perovskite represented by Chemical Formula 3 below is performed.

[Chemical Formula 1] CsX₍₁₋ₐ₎X'ₐ

[Chemical formula 2] PbX₍₃₋ₐ₎

[Chemical Formula 3] CsPbX₍₃₋ₐ₎X'ₐ

In Chemical Formulas 1 to 3, a is a rational number satisfying 0<a≤1, preferably a rational number satisfying 0.30<a≤1, and more preferably a rational number satisfying 0.40<a≤1. In addition, X and X' are the same or different halogens and are independently -Cl or -Br.

The organic solvent used in the preparation of the second precursor solution in step 1 may include one or more selected from dimethylformamide (DMF), dimethylsulfoxide (DMSO), dimethylacetamide (DMAc), dimethyl imidazolidinone (DMI), gamma butyrolactone (GBL) and 2-methoxyethanol (2Me), preferably one or more selected from DMF, DMSO, DMI and 2Me, and more preferably one or more selected from DMF, DMSO and DMI.

In addition, the second precursor solution may have a lead halogen compound concentration of 0.005 M to 1.000 M, preferably 0.005 to 0.600 M, and more preferably 0.010 to 0.200 M. In this case, if the lead halogen compound concentration is less than 0.02 M, the yield and purity of a cesium-based perovskite, which is the final reaction product, may be low, and if it is more than 1.0 M, there may be a problem of reaching the solubility limit.

In addition, to be more specific, when X in Chemical Formula 2 is -Cl, the concentration of a lead halogen compound in the second precursor solution may be 0.005 to 0.050 M, and preferably 0.010 to 0.030 M. In addition, when X in Chemical Formula 1 is -Br, the concentration of a lead halogen compound in the second precursor solution may be 0.02 to 0.60 M, and preferably 0.02 to 0.20 M.

In addition, the first precursor aqueous solution may have a cesium halogen compound concentration of 1.0 M or more, preferably 1.0 to 2.0 M, and more preferably 1.0 to 1.5 M. In this case, since water, which is a solvent of the first precursor aqueous solution, also serves as an antisolvent of the final reaction product, it is advantageous for the synthesis of a high-purity cesium-based perovskite when the cesium halogen compound concentration satisfies the above range, and if the cesium halogen compound concentration in the first precursor aqueous solution is more than 2.0 M, the yield and purity of a cesium-based perovskite, which is the final reaction product, may be low.

In addition, to be more specific, when X in Chemical Formula 1 is -Br, the concentration of a cesium halogen compound in the first precursor aqueous solution may be 1.00 to 2.00 M, and preferably 1.00 to 1.50 M. In addition, when X in Chemical Formula 1 is -Cl, the concentration of a cesium halogen compound in the first precursor solution may be 1.00 to 1.80 M, and preferably 1.00 to 1.60 M.

Next, step 2 is a process of mixing and reacting the second precursor solution and the first precursor aqueous solution to synthesize a precipitate, which is a reaction product. In step 2, the first precursor in the first precursor aqueous solution and the second precursor in the second precursor solution may be mixed and reacted at a molar ratio of 1:0.8 to 1.0, and preferably 1:0.9 to 1.0. In this case, if the molar ratio of the second precursor to the first precursor is less than 0.8 or more than 1.0, the purity of a cesium-based perovskite, which is the final reaction product, may be lowered due to unreacted impurities, and therefore, it is preferable to perform mixing and reacting at the above ratio.

In addition, step 2 may be carried out under ambient conditions at 15 to 35°C.

Additionally, in step 2, after the reaction is completed, filtering may be performed to obtain a precipitate, which is the reaction product.

In addition, the purification of step 3 may be performed by a general method used in the art, and as a preferred embodiment, the precipitate obtained through filtering may be purified 3 to 4 times with a ketone solution such as acetone, dimethyl ketone or propanone, and then filtered again to obtain a powder.

In addition, the powder obtained by purification may be dried by using a general drying method such as thermal drying to prepare a cesium-based perovskite.

In addition, as above, the cesium-based perovskite obtained in step 3 may have a yield of 70.0% or more and a purity of 98.00% or more, preferably a yield of 75.0% to 99.5% and a purity of 99.00% or more, and more preferably a yield of 75.8% to 99.0% and a purity of 99.00% to 99.90%.

Hereinafter, the present invention will be described more specifically through examples, but the following examples do not limit the scope of the present invention, and should be interpreted as helping to understand the present invention.

### [Example]

### Example 1: Preparation of cesium-based perovskite powder

A first precursor aqueous solution with a concentration of 1.30 M was prepared by dissolving CsBr powder (5.78 g), which is a cesium halide compound, in ultrapure water (DI water).

A lead halide compound powder (10.03 g), which is a compound represented by Chemical Formula 2-1 below, was dissolved in DMF to prepare a second precursor solution having a concentration of 0.27 M.

[Chemical Formula 2-1] PbX₍₃₋ₐ₎

In Chemical Formula 2-1, X is -Br and a is 1.

Next, while slowly stirring the second precursor solution under ambient conditions at 22 to 23°C, the first precursor aqueous solution was added dropwise to the second precursor solution, and the reaction was performed while additionally stirring for 2 hours, and then, the mixture was allowed to settle to form a precipitate, which was then filtered to obtain an orange precipitate. In this case, the reaction molar ratio of the first precursor and the second precursor was 1:1.

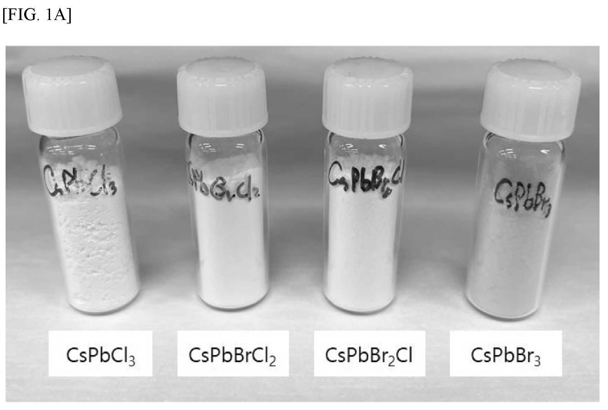

Next, the obtained precipitate was purified three times with acetone, filtered again to obtain a powder, and then placed in a thermal drying oven to perform a drying process to obtain 13.32 g of a cesium-based perovskite powder represented by Chemical Formula 3-1 below. A photograph of the obtained powder is shown in FIG. 1A.

In addition, the yield and purity of the synthesized cesium-based perovskite powder are shown in Table 3.

[Chemical Formula 3-1] CsPb X₍₃₋ₐ₎(X')ₐ

In Chemical Formula 3-1, a is 1, and X and X' are -Br.

### Example 2: Preparation of cesium-based perovskite powder

A first precursor aqueous solution having a concentration of 1.48 M was prepared by dissolving 5.0 g of CsCl powder in ultrapure water (DI water).

A lead halide compound powder (11 g), which is a compound represented by Chemical Formula 2-1 below, was dissolved in DMF to prepare a second precursor solution having a concentration of 0.27 M.

[Chemical Formula 2-1] PbX₍₃₋ₐ₎

In Chemical Formula 2-1, X is -Br and a is 1.

Next, while slowly stirring the second precursor solution under ambient conditions at 22 to 23°C, the first precursor aqueous solution was added dropwise to the second precursor solution, and the reaction was performed while additionally stirring for 2 hours, and then, the mixture was allowed to settle to form a precipitate, which was then filtered to obtain a yellow precipitate. In this case, the reaction molar ratio of the first precursor and the second precursor was 1:1.

Next, the obtained precipitate was purified three times with acetone, filtered again to obtain a powder, and then placed in a thermal drying oven to perform a drying process to obtain 13.01 g of a cesium-based perovskite powder represented by Chemical Formula 3-2 below. A photograph of the obtained powder is shown in FIG. 1A.

In addition, the yield and purity of the synthesized cesium-based perovskite powder are shown in Table 3.

[Chemical Formula 3-2] CsPb X₍₃₋ₐ₎(X')ₐ

In Chemical Formula 3-2, a is 1, X is -Br, and X' is -Cl.

### Example 3: Preparation of cesium-based perovskite powder

3.0 g of CsBr powder was dissolved in ultrapure water (DI water) to prepare a first precursor aqueous solution with a concentration of 1.4 M.

A lead halide compound powder (3.98 g), which is a compound represented by Chemical Formula 2-2 below, was dissolved in DMF to prepare a second precursor solution having a concentration of 0.02 M.

[Chemical Formula 2-2] PbX₍₃₋ₐ₎

In Chemical Formula 2-2, X is -Cl and a is 1.

Next, the first precursor aqueous solution was added to the second precursor solution, stirred for 2 hours under ambient conditions at 22 to 23°C to perform a reaction, and then allowed to settle to form a precipitate, which was then filtered to obtain a light yellow precipitate. In this case, the reaction molar ratio of the first precursor and the second precursor was 1:1.

Next, the obtained precipitate was purified three times with acetone, filtered again to obtain a powder, and then placed in a thermal drying oven to perform a drying process to obtain 5.31 g of a cesium-based perovskite powder represented by Chemical Formula 3-3 below. A photograph of the obtained powder is shown in FIG. 1A.

In addition, the yield and purity of the synthesized cesium-based perovskite powder are shown in Table 3.

[Chemical Formula 3-3] CsPb X₍₃₋ₐ₎(X')ₐ

In Chemical Formula 3-3, a is 2, X is -Br, and X' is -Cl.

### Example 4: Preparation of cesium-based perovskite powder

A first precursor aqueous solution with a concentration of 1.57 M was prepared by dissolving 7.95 g of CsCl powder in ultrapure water (DI water).

A lead halide compound powder (13.13 g), which is a compound represented by Chemical Formula 1-3 below, was dissolved in DMF to prepare a second precursor solution having a concentration of 0.02 M.

[Chemical Formula 1-3] PbX₍₃₋ₐ₎

In Chemical Formula 1-3, X is -Cl and a is 1.

Next, the first precursor aqueous solution was added to the second precursor solution, stirred for 2 hours under ambient conditions at 22 to 23°C to perform a reaction, and then allowed to settle to form a precipitate, which was then filtered to obtain a white precipitate. In this case, the reaction molar ratio of the first precursor and the second precursor was 1:1.

Next, the obtained precipitate was purified three times with acetone, filtered again to obtain a powder, and then placed in a thermal drying oven to perform a drying process to obtain 20.70 g of a cesium-based perovskite powder represented by Chemical Formula 3-4 below. A photograph of the obtained powder is shown in FIG. 1A.

In addition, the yield and purity of the synthesized cesium-based perovskite powder are shown in Table 3.

[Chemical Formula 3-4] CsPb X₍₃₋ₐ₎(X') ₐ

In Chemical Formula 3-4, a is 1, X is -Cl, and X' is -Cl.

### Example 5: Preparation of cesium-based perovskite powder

13.8 g of CsBr powder of Preparation Example 1 used in Example 1 and 8.4 g of CsCl powder of Preparation Example 2 used in Example 2 were dissolved in ultrapure water (DI water) to prepare a first precursor aqueous solution having a concentration of 1.3 M.

In the same manner as in Example 1, 3.6 g of a lead halide compound powder represented by Chemical Formula 1-1 above was dissolved in DMF to prepare a second precursor solution having a concentration of 0.27 M.

Next, the first precursor aqueous solution was added to the second precursor solution, stirred for 2 hours under ambient conditions at 22 to 23°C to perform a reaction, and then allowed to settle to form a precipitate, which was then filtered to obtain a dark yellow precipitate. In this case, the reaction molar ratio of the first precursor and the second precursor was 1:1.

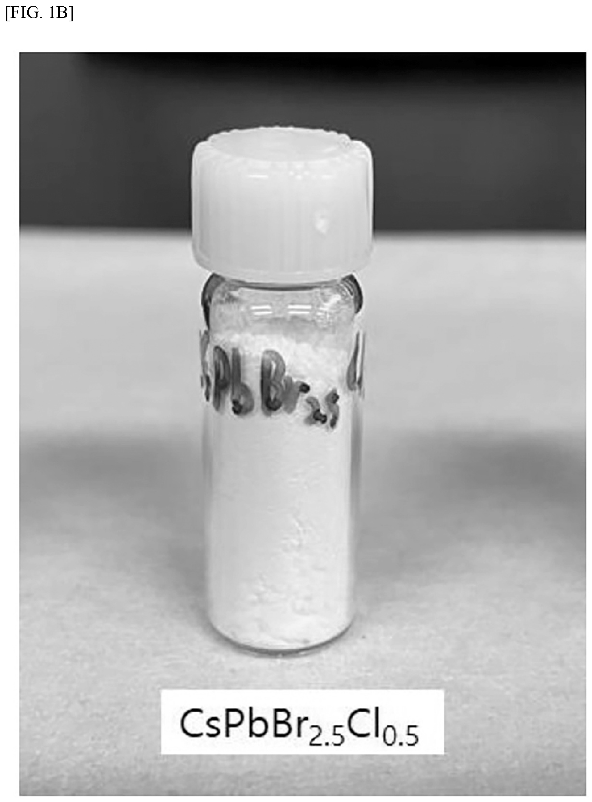

Next, the obtained precipitate was purified three times with acetone, filtered again to obtain a powder, and then placed in a thermal drying oven to perform a drying process to obtain 3.0249 g of a cesium-based perovskite powder represented by Chemical Formula 3-5 below. A photograph of the obtained powder is shown in FIG. 1B.

In addition, the yield and purity of the synthesized cesium-based perovskite powder are shown in Table 1.

[Chemical Formula 3-5] CsPb X₍₃₋ₐ₎(X')ₐ

In Chemical Formula 3-5, a is 0.5, X is -Br, and X' is -Cl.

**[Table 1]**

| Classification | Concentration of first precursor in first precursor aqueous solution | Concentration of second precursor in second precursor solution | Perovskite | Yield | Purity |
|---|---|---|---|---|---|
| Example 1 | 1.30 M | 0.27 M | CsPbBr₃ | 84.0% | 99% |
| Example 2 | 1.48 M | 0.27 M | CsPbBr₂Cl | 81.0% | 99% |
| Example 3 | 1.40 M | 0.02 M | CsPbCl₂Br | 76.0% | 99% |
| Example 4 | 1.57 M | 0.02 M | CsPbCl₃ | 98.0% | 99% |
| Example 5 | 1.30 M | 0.27 M | CsPbBr_{2.5}Cl_{0.5} | 86.0% | 99% |

### Comparative Example 1

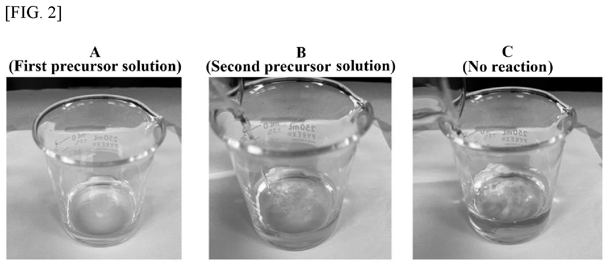

CsBr powder (5.78 g) was dissolved in DMF to prepare a first precursor solution with a concentration of 1.30 M (see A of FIG. 2).

A lead halide compound powder (10.03 g), which is a compound represented by Chemical Formula 2-1 below, was dissolved in DMF to prepare a second precursor solution having a concentration of 0.27 M (see B in FIG. 2).

[Chemical Formula 2-1] PbX₍₃₋ₐ₎

In Chemical Formula 2-1, X is -Br and a is 1.

Next, the first precursor aqueous solution was added dropwise to the second precursor solution while slowly stirring the second precursor solution under ambient conditions at 22 to 23°C, and then stirred for additional 2 hours. Even after stirring for an additional 1 hour, no reaction occurred (see C of FIG. 2).

This is the result of only the solvent (DMF) existing in the first and second precursor mixture solution and no antisolvent, and thus, no reaction occurred.

### Comparative Example 2

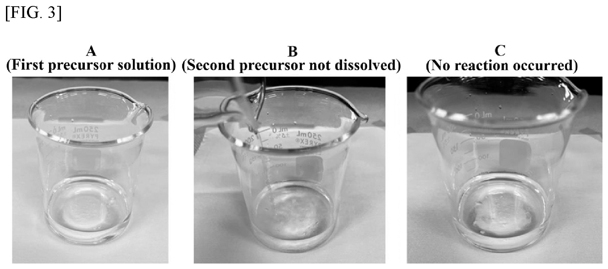

CsBr powder (5.78 g) was dissolved in ultrapure water (DI water) to prepare a first precursor aqueous solution with a concentration of 1.30 M (see A of FIG. 3).

When the lead halide compound powder (10.03 g), which is a compound represented by Chemical Formula 2-1 below, was added to ultrapure water (DI water) and stirred, the lead halide compound powder did not dissolve in the water (see B in FIG. 3), and even when the first precursor aqueous solution was added dropwise to this, no reaction occurred (see C in FIG. 3).

### Experimental Example: XRD and TGA measurements

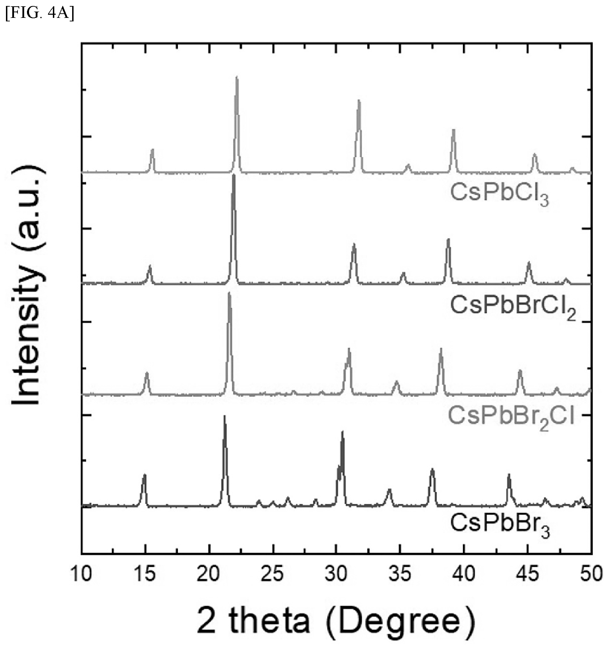

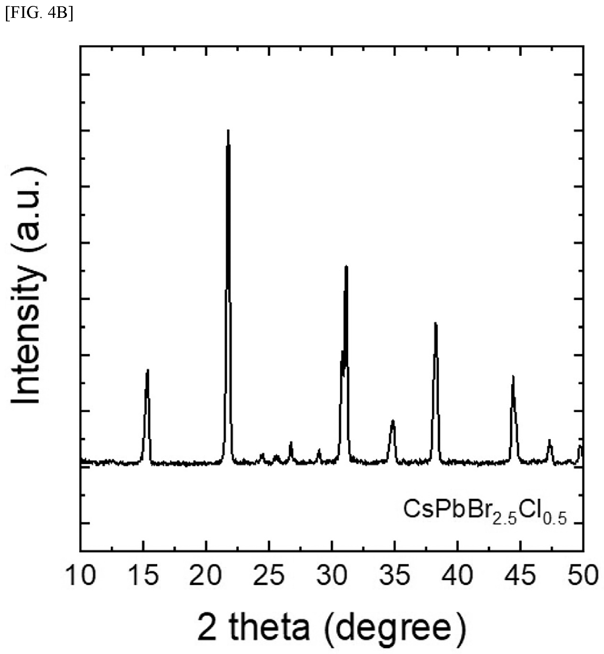

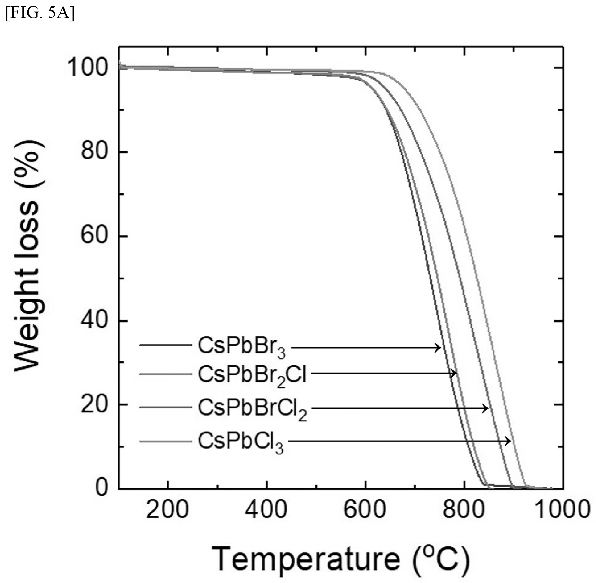

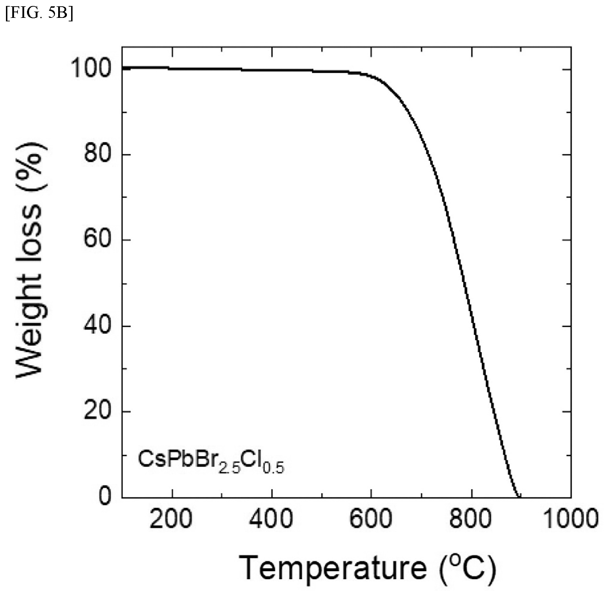

XRD and TGA were measured for each of the cesium-based perovskite powders prepared in Examples 1 to 5, and the results are shown in FIG. 4A (Examples 1 to 4), FIG. 4B (Example 5), FIG. 5A (Examples 1 to 4) and FIG. 5B (Example 5).

Looking at the XRD measurement results of FIGS. 4A and 4B, it was confirmed that as Br was replaced with Cl, the XRD position gradually moved to a higher angle around 21°. This is because the lattice constant decreased as the amount of Cl, which is smaller than Br, increased.

In addition, when looking at the TGA measurement results of FIGS. 5A and 5B, weight loss is not observed except in section 1 (weight loss from around 600°C), which means that the materials were well combined and nothing other than a single substance existed. In addition, it was confirmed that the weight loss section gradually shifted to higher temperatures as the Cl content increase.

### Example 6 and Comparative Examples 3 to 5

Perovskite compounds represented by CsPbBr₂Cl were prepared by using the same method as in Example 2, but the concentration of the first precursor in the first precursor aqueous solution or the concentration of the second precursor in the second precursor aqueous solution was changed as shown in Table 4 below, and Examples 6 to 7 and Comparative Examples 2 to 3 were performed, respectively. In addition, the yield and purity of the synthesized perovskite compounds are shown in Table 2.

**[Table 2]**

| Classification | Concentration of first precursor in first precursor aqueous solution | Concentration of second precursor in second precursor solution | Perovskite | Yield | Purity |
|---|---|---|---|---|---|
| Example 2 | 1.48 M | 0.27 M | CsPbBr₂Cl | 81.0% | 99.6% |
| Example 6 | 1.05 M | 0.27 M | CsPbBr₂Cl | 74.2% | 99.2% |
| Comparative Example 3 | 2.60 M | 0.27 M | CsPbBr₂Cl | 34.2% | 97.6% |
| Comparative Example 4 | 0.85 M | 0.20 M | CsPbBr₂Cl | 64.2% | 98.2% |
| Comparative Example 5 | 0.75 M | 0.10 M | CsPbBr2Cl | 37.1% | 97.8% |

Looking at Table 2 above, Examples 2 and 6 showed results that satisfied both a high yield of 70% or more and a high purity of 95% or more. In contrast, in the case of Comparative Example 3 in which the concentration of the first precursor aqueous solution was more than 2.00 M, the concentration of the first precursor aqueous solution became too high such that the amount of anti-solvent was relatively insufficient, resulting in a problem that the yield was significantly reduced, and also, reaction products such as PbBr₃ were generated and precipitated, resulting in a problem that not only the yield but also the purity was low. Additionally, in the case of Comparative Examples 4 and 5 in which the concentration of the first precursor aqueous solution was less than 1.00 M, although the purity was high, there was a problem that the yield was poor overall. It is determined that this is because the final product was dissolved in DMF, which is a solvent of the second precursor solution.

Through the above examples and experimental examples, it was confirmed that high-purity cesium-based perovskite may be prepared in high yield.

## Claims

1. A method for preparing a cesium-based perovskite, **characterized by** performing a process comprising:
step 1 of preparing a first precursor aqueous solution by dissolving a cesium halogen compound represented by Chemical Formula 1 in water and a second precursor solution by dissolving a lead halogen compound represented by Chemical Formula 2 in an organic solvent, respectively;
step 2 of introducing the first precursor aqueous solution into the second precursor solution and reacting to obtain a precipitate that is a reaction product; and
step 3 of purifying and drying the obtained precipitate to obtain a cesium-based perovskite represented by Chemical Formula 3 below;
[Chemical Formula 1] CsX₍₁₋ₐ₎X'ₐ
[Chemical Formula 2] PbX(3-a)
[Chemical Formula 3] CsPbX₍₃₋ₐ₎X'ₐ
wherein in Chemical Formula 1 to Chemical Formula 3, a is a rational number satisfying 0 < a ≤ 1, and X and X' are independently -Cl or -Br.

2. The method of claim 1, wherein the organic solvent of step 1 comprises one or more selected from dimethylformamide (DMF), dimethylsulfoxide (DMSO), dimethylacetamide (DMAc), dimethyl imidazolidinone (DMI), gamma butyrolactone (GBL) and 2-methoxyethanol (2Me).

3. The method of claim 1, wherein the second precursor solution has a lead halide compound concentration of 0.005 M to 1.000 M.

4. The method of claim 1, wherein the first precursor aqueous solution has a cesium halogen compound concentration of 1.0 M or more.

5. The method of claim 1, wherein step 2 mixes and reacts a first precursor in the first precursor aqueous solution and a second precursor in the second precursor solution so as to have a molar ratio of 1:0.8 to 1.0.

6. The method of claim 1, wherein the reacting of step 2 is carried out under ambient conditions at 20 to 35°C.

7. The method of claim 1, wherein the cesium-based perovskite obtained in step 3 has a yield of 75.0% to 99.5% and a purity of 99.00% or more.

8. A cesium-based perovskite powder, prepared by the method according to any one of claims 1 to 7, and having a purity of 99.00% or more.

9. A perovskite complex, prepared by using the cesium-based perovskite of claim 8 that is a perovskite represented by Chemical Formula 4 below;
[Chemical Formula 4] CsₐMX_{b}X'_{(3-b)}
wherein in Chemical Formula 4, M is a divalent cation and comprises one or two selected from Fe, Co, Ni, Cu, Sn, Pb, Bi, Ge, Ti, Eu and Zr, and X and X' are independently Cl, Br or I (where X and X' are different halogen elements), a is an integer of 0 < a ≤ 1, and b is an integer of 0 < a ≤ 3.
